# EUROPEAN PATENT SPECIFICATION

(11) **EP 3 671 002 B1**
(45) Date of publication and mention of the grant of the patent: **07.07.2021**
(21) Application number: 18460075.7
(22) Date of filing: 20.12.2018
(51) Int. Cl.: F16M 11/22, F16B 1/00, F16M 13/02, F16B 41/00, F16B 43/00

(54) **MOUNTING SYSTEM AND A TECHNICAL COMPONENT**
MONTAGESYSTEM UND EIN TECHNISCHES BAUTEIL
SYSTÈME DE MONTAGE ET COMPOSANT TECHNIQUE

(43) Date of publication of application: 24.06.2020
(73) Proprietor: Lug Light Factory Sp. z o.o., 65-127 Zielona Góra (PL)
(72) Inventor: Romaniuk, Michal, 26-400 Przysucha (PL); Walendowski, Pawel, 67-100 Nowa Sól (PL); Wieczorek, Kamil, 65-012 Zielona Góra (PL); Duch, Maciej, 66-100 Krezoly / Sulechów (PL)
(74) Representative: Gornicki, Pawel

(56) References cited:
- EP-A1- 1 281 877
- JP-A- 2000 164 030
- JP-U- H0 333 902
- US-A- 2 492 115
- US-A- 5 183 331
- US-A1- 2018 058 494

## Description

The subject of the invention is a system for mounting a technical component such as a telecommunication device, signalling device or the lighting fixture to the floor, wall, facade, pole, arm or other supporting structures.

Known mounting systems for technical components to the surface on which the technical component is to be located are usually equipped with a handle mounted on that surface, to which the technical component is mounted by means of bolts. Technical component can be additionally fixed with additional locking screws. One of the commonly used mounting systems comprises of a C-shaped bracket, fixed to the mounting surface. The ends of the bracket arms have slot-shaped recesses at the top, in which the axis elements protruding from the fixture of the technical component are being inserted. Rotation of the fixture of a technical component around the axis passing through the protruding elements, located in the bracket slots allows selection of the desired placement of the mounted technical component with respect to the mounting surface. In order to permanently fix the selected position and permanently connect the component with the bracket, according to the instructions, on the protruding elements of the fixture a number of flat, resilient and lace washers should be put, and then tightened with hexagonal nuts with a wrench. Adjustments are made by partial tightening the nuts upon first installation or loosening during the next adjustment. After tightening the nuts, the next operation involves putting on the protective plastic covers. Mounting a large and/or heavy component on the mounting surface, especially at height, by means of a number of separate elements is very cumbersome and often requires the involvement of the two fitters simultaneously.

The solution protected by US patent No US10001265B1 describes a mounting system of the lighting fixture on the wall, consisting of a C-shaped bracket, the web of which has mounting holes for fixing to the wall, floor, ceiling or any other type of surface by means of screws or other coupling devices, and a mounting plate coupled to the rear wall of the lighting fixture equipped with a pair of brackets perpendicular to its surface. The C-section arms and the brackets of the mounting plate have openings for connection with the brackets of the mounting plate using screws or other coupling components. One of the openings in the brackets of the mounting plate has the shape of an arched slot, and thus the mounting plate is rotatable about an axis passing through the second pair of the rotary elements coupling the C-section arms with the brackets of the mounting plate. Also in this case, the fixing operation of the technical component is troublesome. The fitter holding the mounted technical component with one hand, must use his other hand to insert and lock the coupling elements in each of the mounting holes. Therefore, often for an effective installation of a technical component, the help the another fitter is necessary, which is associated with more effort for the installation of a technical component. Other solutions are proposed in US5183331A, JP2000164030A and JPH0333902U.

The purpose of the invention was to design a mounting system for technical components, which allows the fitter to easily, quickly and safely fix the technical component to the mounting surface. This purpose was achieved by designing a system, in which the bracket of a technical component, and the elements retaining the position of the component with respect to the bracket can be delivered to the installation site as assembled and easily connected with a technical component to be mounted.

The mounting system for a technical component, according to the invention, consists of a C-shaped bracket mounted with a web to the mounting surface and the fasteners coupling the bracket arms with the technical component. The system is characterised in that each of the arms of the bracket has an opening with a flange on the inner side of the arms. The body of a technical component has slots for flanges around the openings in the bracket arms. The bottom of each slot has a cylindrical, threaded hole with a chamfered inlet edge, coaxial with the flange inserted into the slot on the bracket arm, in which a screw of the coupling unit is inserted to connect the body of a technical component to the bracket arm. Coupling unit consists of a screw and washer, flexible washer with a support washer, the said support washer is fixed to the bracket arm in such a manner that the flrxible washer is located between the support washer and the bracket arm, in a coaxial position with the hole in the support washer and the hole in the bracket arm. The diameter of the hole in the flexible washer is smaller than the outer diameter of the screw thread of the coupling unit. Thus the edge of the hole in the flexible washer is squeezed into the space between the screw thread, blocking spontaneous sliding of the screw from the bracket flange.

It is preferred that the flxible washer has notches on the inner edge.

It is preferred that the coupling unit has a guard, which protects the connection point from the adverse effects of the environment.

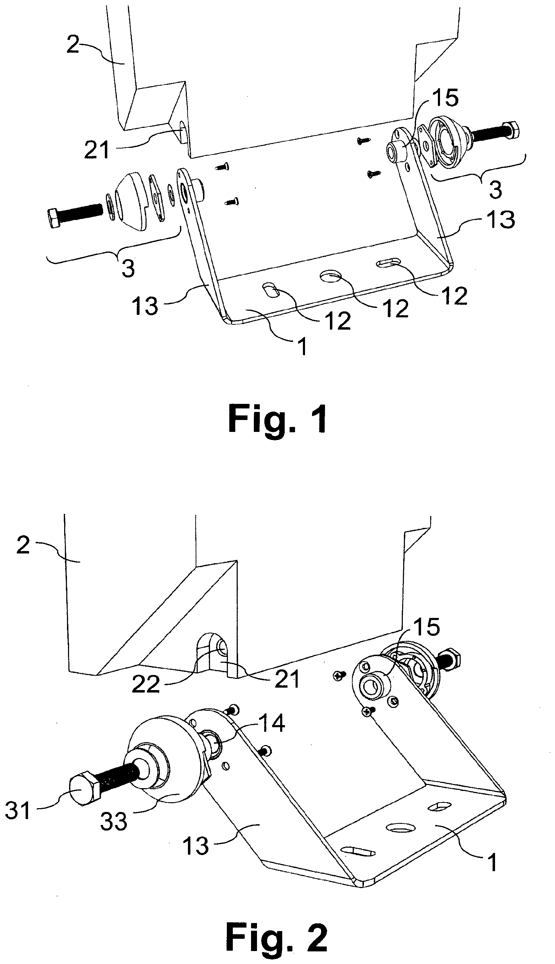

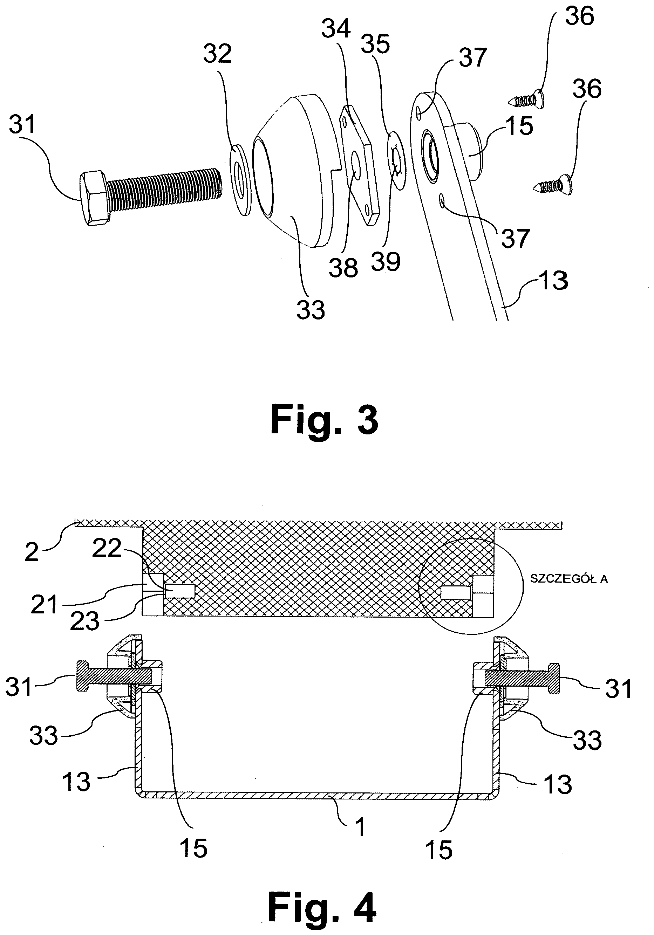

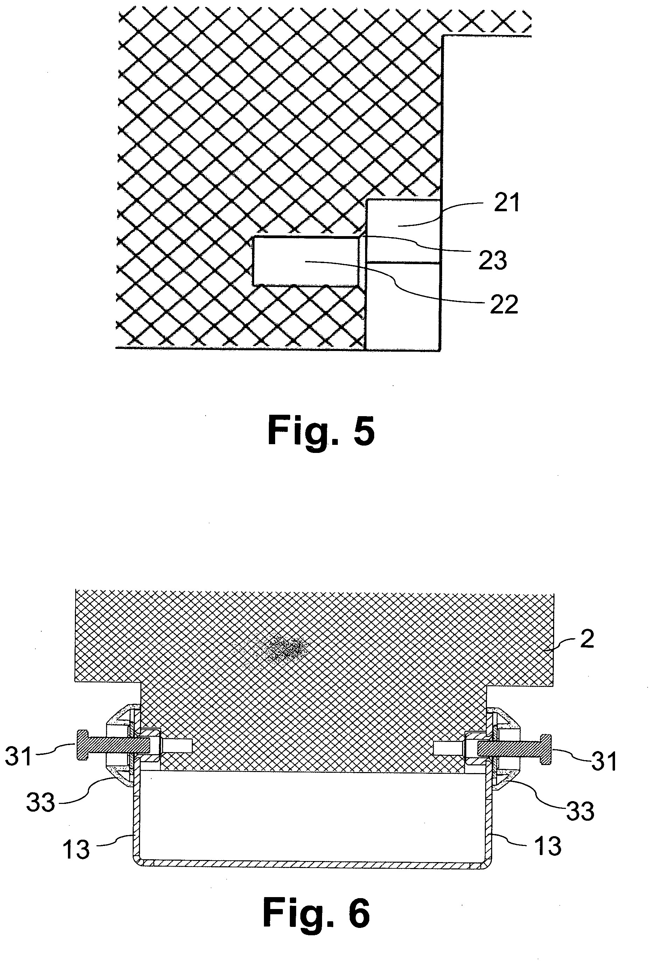

The invention is further explained in an exemplary execution based on a drawing, in which Fig. 1 shows the elements of the mounting system for a technical component in an axonometric view, front view, where the elements for securing the bracket with the technical components are shown in scatter, Fig. 2 shows the elements of the mounting system for a technical component in an axonometric view, side view, and the elements securing the bracket with the technical component are shown in scatter, Fig. 3 shows a scattered view of elements securing the bracket with the technical component, Fig. 4 shows a cross-sectional view of the elements of the mounting system for a technical component, as assembled, Fig. 5 shows detail A marked in Fig. 4, and Fig. 6, Fig. 7 and Fig. 8 show stages of securing the technical component fixture to the bracket in cross-section.

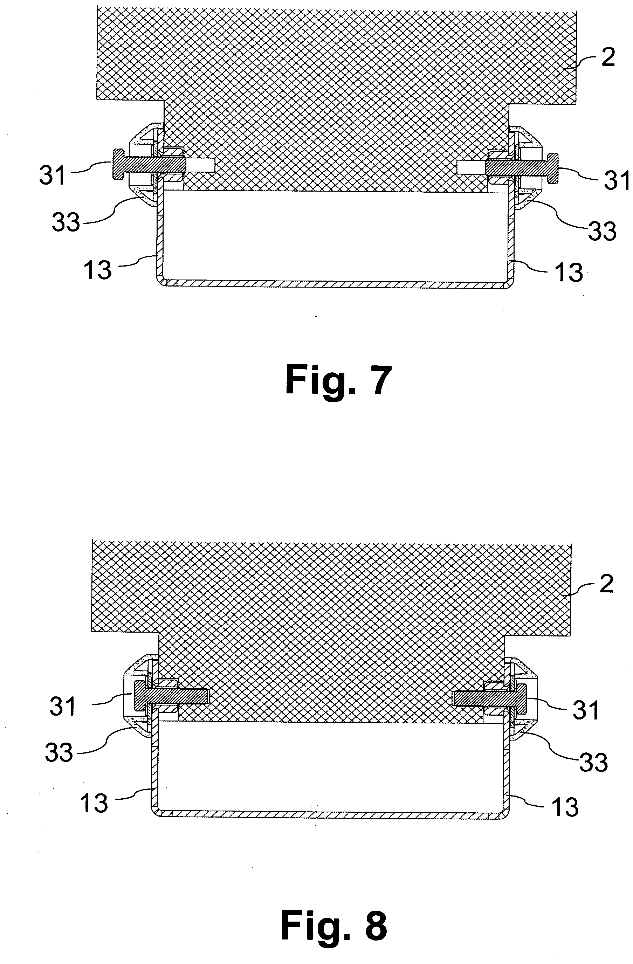

The mounting system for a technical component, according to the invention consists of a bracket **1** fixed to the mounting surface, slots **21** in the body of the mounted technical component **2** and coupling units **3** connecting the arms **13** of the bracket **1** with slots **21 in** the body **2** of the technical component. Bracket **1** has the shape of a C-profile with the mounting holes **12** in the web for securing to the mounting surface. At the top of each arm **13** of the bracket **1** there is a hole **14** with flange **15** at the inner side of the arms **13** . The body of a technical component **2** has slots **21** for flanges **15** around the holes **14** in the bracket arms **13..** At the bottom of each slot **21** there is a cylindrical, threaded hole **22** with a chamfered inlet edge **23,** coaxial with the flange **15** in the slot **21** around the hole **14** in the bracket arm **13.** Hole **22** is prepared to accept the screw **31** of the coupling unit **3** connecting the body of the technical component **2** with the arm **13** of bracket **1** . Coupling unit **3** consists of a screw **31** with washer **32** and flexible washer **35** and a washer **34** supporting the flexible washer **35** and guards **33** of the mounting unit **3.** Flexible washer **35** is supported by a washer **34** fixed to the arm **13** of the bracket **1** by means of bolts **36** passing through holes **37** in the arm **13** of the bracket **1**. Hole **39** in the flexible washer **35** aligned with the hole **38** the support washer **34** and hole **14** in the arm **13** of the bracket **1.** The diameter of the hole in the flexible washer **35** is smaller than the outer diameter of the screw thread **31.** After inserting the screw **31** in the hole **39** of the flexible washer **35,** the edge of the hole **39** of the flexible washer **35** is located between the threads of the screw **31** blocking spontaneous sliding of the screw **31** from the flange **15** of the bracket **1**. Thus the screw **31** with washer **32** and the guard **33** inserted into the hole **14** of the arm **13** so that the end of its pin is inside the flange **15** around the hole **14** is retained in this position. Bracket **1** is thus secured with the coupling units **3** and prepared for fixing on the mounting surface and mounting the technical component **2** on the bracket **1.** This allows the fitter during the installation not to simultaneously hold the mounted technical component and individual elements of the coupling unit **3.** Mounting the technical component **2** on the bracket **1** secured to the coupling unit **3** as described above, requires inserting the flanges **15** of the bracket **1** into the slots **21** in the body of a technical component **2,** inserting the ends of the screws **31** into holes **22** to the depth of the edge chamfer **23,** as shown in Fig. 6. In this position of the screws **31** the technical component **2** is supported by the bracket **1** and is free to rotate about the axis passing through the holes **14** in the arms of the bracket, which allows for the adjustment of the position of the mounted technical component **2** with respect to the mounting surface. The desired position of a technical component **2** is fixed by screwing the screws **31** in holes **22,** as shown in cross-section in Fig. 7. Guards **33** of the mounting unit **3** protect the connection point against the adverse effects of the environment, and improve the aesthetics of the connection.

### List of symbols

1 - bracket,
12 - mounting holes in the bracket web,
13 - bracket arm 1,
14 - hole in the bracket arm,
15 - flange around the hole 14,
2 - technical component,
21 - slot in the body of a technical component,
22 - cylindrical hole in the bottom of the slot 21,
23 - inlet edge of the hole 22,
3 - coupling unit,
31 - screw of the coupling unit 3,
32 - washer,
33 - guard of the mounting unit 3,
34 - washer supporting the flexible washer 35,
35 - flexible washer,
36 - bolts securing the support washer 34,
37 - mounting holes in the bracket arm 1,
38 - hole in the support washer 34,
39 - hole in the flexible washer.

## Claims

1. A mounting system and a technical component, comprising a bracket (1) fixed to a mounting surface and coupling units (3) coupling arms (13) of the bracket with the body of the technical component (2), wherein each arm (13) of the bracket (1) has a hole (14) with a flange (15) on the inner side of the arms (13), and the coupling unit (3) consists of a screw (31) with a washer (32) and a flexible washer (35) with a support washer (34), the support washer (34) is secured to the arm (13) of the bracket (1) in such a manner that the flexible washer (35) is located between the support washer (34) and the arm of the bracket (13) in a position coaxial with a hole (38) in the support washer (34) and the hole (14) in the bracket arm (13), **characterized in that** the body of the technical component (2) has slots (21) for the flanges (15) around the holes (14) in the bracket arms (13), wherein the bottom of each slot (21) has a cylindrical threaded hole (22) with a chamfered inlet edge (23) aligned with the flange (15) on the
bracket arm (13) when the flange (15) is inserted into the slot (21), wherein the hole (22) receives a screw (31) of the coupling unit (3) securing the body of a technical component (2) to the bracket arm (13), and the diameter of the hole (39) in the flexible washer (35) is smaller than the outer diameter of the screw thread (31) of the coupling unit (3).

2. Mounting system and technical component, according to Claim 1, **characterized in that** the flexible washer (35) has notches on the edge of the hole (39).

3. Mounting system and a technical component, according to Claim 1, **characterized in that** the coupling unit (3) has a guard (33), which protects the connection point from the adverse effects of the environment.

## Patentansprüche

1. Ein Montagesystem und ein technisches Bauteil, bestehend aus einer an der Montagefläche befestigten Halterung (1) und Verbindungseinheiten (3), die die Arme (13) der Halterung mit dem Körper des technischen Bauteils (2) verbinden, wobei jeder Arm (13) der Halterung (1) ein Loch (14) mit einem Flansch (15) auf der Innenseite der Arme (13) hat, und die Verbindungseinheit (3) aus einer Schraube (31) mit einer Unterlegscheibe (32) und einer elastischen Unterlegscheibe (35) mit einer Stützscheibe (34) besteht, und die Stützscheibe (34) so an dem Arm (13) der Halterung (1) befestigt ist, dass sich die elastische Unterlegscheibe (35) zwischen der Stützscheibe (34) und dem Arm der Halterung (13) in einer koaxialen Position zu einem Loch (38) in der Stützscheibe (34) und dem Loch (14) im Halterungsarm (13) befindet, **dadurch gekennzeichnet, dass** der Körper des technischen Bauteils (2) Vertiefungen (21) für die Flansche (15) um die Löcher (14) in den Halterungsarmen (13) besitzt, wobei der Boden jeder Vertiefung (21) ein zylindrisches Gewindeloch (22) mit einer abgeschrägten Eintrittskante (23) aufweist, das mit dem in die Vertiefung (21) eingeführten Flansch (15) am Halterungsarm (13) ausgerichtet ist, wobei das Loch (22) eine Schraube (31) der Verbindungseinheit (3) erhält, die den Körper des technischen Bauteils (2) am Halterungsarm (13) befestigt, und der Durchmesser des Loches (39) in der elastischen Unterlegscheibe (35) kleiner als der Außendurchmesser des Schraubengewindes (31) der Verbindungseinheit (3) ist.

2. Montagesystem und ein technisches Bauteil nach Anspruch 1, **dadurch gekennzeichnet, dass** die elastische Unterlegscheibe (35) Kerben an der Lochkante (39) hat.

3. Montagesystem und ein technisches Bauteil nach Anspruch 1, **dadurch gekennzeichnet, dass** die Verbindungseinheit (3) eine Abdeckung (33) hat, die die Verbindungsstelle vor negativen Einflüssen der Umgebung schützt.

## Revendications

1. Un système de montage et composant technique, comprenant un support (1) fixé sur la surface de montage et des unités d'accouplement (3) raccordant les bras (13) du support au corps du composant technique (2), où chaque bras (13) du support (1) possède un orifice (14) avec une bride (15) du côté intérieur des bras (13), et où l'unité d'accouplement (3) est composé d'une vis (31) avec une rondelle (32) et une rondelle flexible (35) avec une rondelle de support (34), la rondelle de support (34) étant fixée au bras (13) du support (1) de manière à ce que la rondelle flexible (35) se trouve entre la rondelle de support (34) et le bras du support (13) dans une position coaxiale avec un orifice (38) dans la rondelle de support (34) et un orifice (14) dans le bras de support (13), **caractérisé en ce que** le corps du composant technique (2) possède des encoches (21) pour les brides (15) autour des orifices (14) dans les bras du support (13), et où la partie inférieure de chaque encoche (21) dispose d'un orifice fileté cylindrique (22) avec un bord d'entrée chanfreiné (23) aligné sur la bride (15) du bras du support (13), insérée dans l'encoche (21), où l'orifice (22) reçoit la vis (31) de l'unité d'accouplement (3) fixant le corps du composant technique (2) au bras du support (13), et où le diamètre de l'orifice (39) dans la rondelle flexible (35) est inférieur au diamètre extérieur du pas de vis (31) de l'unité d'accouplement (3).

2. Système de montage et composant technique conforme à la Réclamation 1, **caractérisé en ce que** la rondelle flexible (35) possède des entailles sur le bord de l'orifice (39).

3. Système de montage et composant technique conforme à la Réclamation 1, **caractérisé en ce que** l'unité d'accouplement (3) possède une protection (33) qui protège le point de connexion contre les effets négatifs de l'environnement.
